# EUROPÄISCHE PATENTSCHRIFT

(11) **EP 1 180 535 B1**
(45) Veröffentlichungstag und Bekanntmachung des Hinweises auf die Patenterteilung: **13.11.2002**
(21) Anmeldenummer: 01117683.1
(22) Anmeldetag: 26.07.2001
(51) Int. Cl.: C08L 29/04

(54) **Verdickungsmittel-Zusammensetzungen mit Vinylalkohol-Mischpolymerisaten und Celluloseethern**
Thickening agent compositions based on vinyl alcohol copolymers and cellulose ethers
Compositions d'agents épaississants à base de copolymères d'alcool vinylique et d'éthers cellulosiques

(30) Priorität: 17.08.2000 DE 10040172
(43) Veröffentlichungstag der Anmeldung: 20.02.2002
(73) Patentinhaber: Wacker-Chemie GmbH, 81737 München (DE)
(72) Erfinder: Bacher, Andreas, Dr., 84489 Burghausen (DE); Bauer, Werner, Dr., 84543 Winhöring (DE); Dietrich, Ulf, Dr., 84503 Altötting (DE); Kayser, Bernd, Dr., 84489 Burghausen (DE); Schmitz, Marion, Dr., 84489 Burghausen (DE); Zeh, Harald, Dr., 84489 Burghausen (DE); Mayer, Theo, Dr., 84387 Julbach (DE); Herold, Hardy, Dr., 84489 Burghausen (DE)
(74) Vertreter: Schuderer, Michael, Dr.

(56) Entgegenhaltungen:
- EP-A- 0 220 491
- EP-A- 0 272 012
- EP-A- 0 477 900
- EP-A- 0 773 198
- DE-A- 4 331 141
- GB-A- 1 137 603
- US-A- 3 098 049
- DATABASE WPI Section Ch, Week 8424 Derwent Publications Ltd., London, GB; Class A14, AN 1984-149657 XP002180812 & JP 59 078963 A (DENKI KAGAKU KOGYO K.K.) , 8. Mai 1984 (1984-05-08)
- DATABASE WPI Section Ch, Week 7522 Derwent Publications Ltd., London, GB; Class A93, AN 1975-37058W XP002180813 & SU 430 111 A (CEMENT IND. RES. INST.), 7. Januar 1975 (1975-01-07)
- CHEMICAL ABSTRACTS, vol. 88, no. 12, 20. März 1978 (1978-03-20) Columbus, Ohio, US; abstract no. 75032n, Seite 36; Spalte 1; XP002180811 & JP 77 057256 A (DENKI KAGAKU KOGYO K.K.)
- DATABASE WPI Section Ch, Week 8440 Derwent Publications Ltd., London, GB; Class A93, AN 1984-246030 XP002180814 & JP 59 146960 A (HOECHST GOSEI K.K.), 23. August 1984 (1984-08-23)

## Beschreibung

Die Erfindung betrifft Verdickungsmittel auf der Basis von Zusammensetzungen mit Vinylalkohol-Mischpolymerisaten und Celluloseethern sowie deren Verwendung, insbesondere in Baustoffmassen.

In der Bauindustrie werden zum Mauern, Verputzen, Spachteln, Kleben und Restaurieren Kalkhydrat- und Zementmischungen eingesetzt. Zur Verbesserung der Verarbeitungseigenschaften und Wasserretentionseigenschaften setzt man den Kalkhydrat- und - Zementmischungen wasserlösliche Polymere zu, mit denen sehr gute Verarbeitbarkeit erreicht wird und ein Wasserverlust der Kalkhydrat- und Zementmassen auf stark saugenden Untergründen vor dem Abbinden und damit eine ungenügende Durchhärtung oder Rißbildung der Baumasse verhindert werden soll. Weiterhin kann man mit solchen Zusatzstoffen das Eigenschaftsprofil der Baustoffe auf ein gewünschtes Anwendungsprofil angleichen. Als verdickende Additive werden hauptsächlich wasserlösliche Polymere auf Basis von Celluloseethern wie Methylcellulose (MC), Hydroxyethylcellulose (HEC), Methylhydroxyethylcellulose (MHEC) oder Methylhydroxypropylcellulose (MHPC) zugegeben (EP-A 773198).

Als Verdicker konkurrieren Celluloseether mit vollsynthetischen Polymeren wie Polyurethan-Assoziativverdickern, Polyacrylaten, Polyiminen und Polyamiden, sowie natürlichen wasserlöslichen Polymeren wie Agar-Agar, Tragant, Carageen, Gummi a-rabicum, Alginate, Stärke, Gelatine und Casein. Nachteilig bei Celluloseethern, insbesondere Hydroxyethyl-Methylcellulose, welche üblicherweise in zementären Bauanwendungen eingesetzt werden, ist allerdings die teilweise erhebliche Verzögerung des Zementabbindens. Polyvinylalkohole sind zwar als Bestandteile von zementären Massen bekannt, aber nur in relativ niedermolekularer Form, in der diese nicht verdickend wirken können, beispielsweise als Schutzkolloide von Additiven wie Polymerdispersionen oder Redispersionspulvern. In höhermolekularer Form wäre zwar die verdickende Wirkung besser, problematisch ist dann aber die geringe Kaltwasserlöslichkeit und die damit einhergehenden schlechten Verarbeitungseigenschaften.

Die EP-A 272012 beschreibt die Verwendung von Vinylalkohol-Copolymeren als Verdickungsmittel in wässrigen Systemen, beispielsweise Dispersionsfarben, wobei die Copolymeren neben Vinylalkohol-Einheiten noch Acrylsäureester-Einheiten mit mindestens zwei Ethylenoxideinheiten im Esterrest enthalten. In der JP-A 10/087937 wird die Verbesserung der mechanischen Festigkeit von zementhaltigen Baustoffen durch Zugabe von Polyvinylalkohol oder Vinylalkohol-Copolymeren mit definierter Löslichkeit in wässriger Ca(OH)₂-Lösung beschrieben. Die Vinylalkoholcopolymere enthalten Carboxyl-, Sulfonat- und N-Vinyl-Einheiten.

In der EP-A 458328 wird ein Verdickersystem für wasserhaltige Baustoffe beschrieben, welches aus einer Kombination aus Celluloseether, Polyvinylalkohol und Borax besteht, und dessen Wirkung auf der Komplexbildung zwischen Polyvinylalkohol und Borax basiert. Die DD-A 251968 beschreibt ein Verfahren zur Herstellung eines Trockenmörtels, wobei Carboxymethylcellulose und teilverseifter Polyvinylalkohol zum Trockenmörtel gegeben werden und der Celluloseether als Wasserretentionsmittel und der Polyvinylalkohol zur Verbesserung der Frischmörteleigenschaften dient. Zur Verbesserung der Adhäsion und der Oberflächeneigenschaften von dünnen Putzbeschichtungen wird in der JP-A 59-78963 vorgeschlagen, die zementhaltigen Putze mit Methylcellulose und einem Polyvinylalkohol, welcher mit hydrophoben und anionischen, hydrophilen Gruppen substituiert ist, zu versetzen. Die hydrophoben Gruppen werden dabei mittels Copolymerisation mit hydrophoben Comonomeren, die hydrophilen Gruppen mittels Copolymerisation mit Vinylsulfonsäure bzw. Sulfonierung eingeführt.

Der Erfindung lag die Aufgabe zugrunde, ein vollsynthetisches wasserlösliches Polymer zur Verfügung zu stellen, das in bautechnischen, insbesondere auch zementären, Formulierungen als Verdickungsmittel wirkt und hervorragende Verarbeitungs- und mechanische Eigenschaften erzeugt, ohne die obengenannten Nachteile aufzuweisen.

Gegenstand der Erfindung sind Verdickungsmittel auf der Basis von Zusammensetzungen mit Vinylalkohol-Mischpolymerisaten und Celluloseethern, wobei
A) ein oder mehrere vollverseifte oder teilverseifte Vinylalkohol-Polymerisate mit einem Hydrolysegrad von 75 bis 100 Mol-% und einem Molekulargewicht Mw > 100000 enthalten sind, erhältlich
   a) durch Verseifung von Vinylacetat-Mischpolymerisaten, welche neben Vinylacetat-Einheiten noch Comonomereinheiten enthalten, welche sich von einem oder mehreren Comonomeren ableiten aus der Gruppe umfassend 1-Alkylvinylester mit C₁- bis C₅-Alkylrest von C₁- bis C₅-Carbonsäuren, Allylester, Vinylester von alpha-verzweigten Carbonsäuren mit 5 bis 12 C-Atomen, Acrylsäureund Methacrylsäureester von C₁- bis C₁₈-Alkoholen, oder erhältlich
   b) durch Acetalisierung der genannten verseiften Vinylacetat-Mischpolymerisate oder von verseiften Vinylacetat-Homopolymerisaten mit aliphatischen oder aromatischen, gegebenenfalls substituierten, Aldehyden
   und
B) ein oder mehrere Celluloseether aus der Gruppe umfassend Alkylcelluloseether, Hydroxyalkylcelluloseether, Carboxyalkylcelluloseether, Hydroxyalkylpolyoxyalkyl-Celluloseether mit jeweils C₁- bis C₁₀-Alkylresten, sowie Cellulosemischether mit mindestens zwei verschiedenen Substituenten aus der Gruppe umfassend Alkyl-, Hydroxyalkyl-, Carboxyalkylreste und Hydroxyalkylpolyoxyalkyl mit jeweils C₁- bis C₁₀-Alkylresten.

Bevorzugter 1-Alkylvinylester ist Isopropenylacetat. Bevorzugte Vinylester von alpha-verzweigten Carbonsäuren sind solche von alpha-verzweigten Carbonsäuren mit 9 bis 11 C-Atomen; besonders bevorzugt werden Vinylester von alpha-verzweigten Carbonsäuren mit 10 C-Atomen (VeoVa10, Handelsname der Fa. Shell). Bevorzugte Acrylsäure- und Methacrylsäureester sind solche von C₁- bis C₁₀-Alkoholen; besonders bevorzugt werden Methylacrylat, Ethylacrylat, Butylacrylat, 2-Ethylhexylacrylat und Methylmethacrylat, 2-Ethylhexylmethacrylat.

Im allgemeinen beträgt der Hydrolysegrad der teilverseiften oder vollverseiften Vinylalkohol-Mischpolymerisate 75 bis 100 Mol-%. Bei vollverseiften Vinylalkohol-Polymerisaten vorzugsweise von 97.5 bis 100 Mol-%, besonders bevorzugt von 98 bis 99.5 Mol-%. Bei teilverseiften Vinylalkohol-Polymerisaten vorzugsweise von 80 bis 95 Mol-%, besonders bevorzugt von 86 bis 90 Mol-%. Der Anteil der genannten Comonomer-Einheiten beträgt 0.1 bis 50 Gew.-%, vorzugsweise 0.3 bis 15 Gew.-%, besonders bevorzugt 0.5 bis 6 Gew.-%, jeweils bezogen auf das Gesamtgewicht des Vinylalkohol-Mischpolymerisats.

Besonders bevorzugt werden Vinylalkohol-Mischpolymerisate erhältlich durch Verseifung von Vinylacetat-Mischpolymerisaten mit jeweils 0.3 bis 15 Gew.-% Isopropenylacetat oder Vinylestern von alpha-verzweigten Carbonsäuren mit 9 bis 11 C-Atomen, oder Methyl-, Ethyl-, Butyl-, 2-Ethylhexylacrylat, und Methylmethacrylat und 2-Ethylhexylmethacrylat. Besonders bevorzugt werden auch solche mit 0.3 bis 15 Gew.-% Isopropenylacetat-Einheiten und 0.3 bis 15 Gew.-% Einheiten von Vinylestern von alpha-verzweigten Carbonsäuren mit 9 bis 11 C-Atomen. Schließlich werden noch besonders bevorzugt Vinylalkohol-Mischpolymerisate mit 0.5 bis 6 Gew.-% Isopropenylacetat und 0.5 bis 6 Gew.-% Vinylestern von alpha-verzweigten Carbonsäuren mit 10 C-Atomen (VeoVa10) und 0.5 bis 6 Gew.-% Methylacrylat; sowie Vinylalkohol-Mischpolymerisate mit 0.5 bis 6 Gew.-% Isopropenylacetat und 0.5 bis 6 Gew.-% 2-Ethylhexylmethacrylat und 0.5 bis 6 Gew.-% Methylacrylat.

Beim Einsatz von acetalisierten Vinylalkohol-Homo- oder - Mischpolymerisaten werden teil- oder vollverseifte Vinylacetat-Homo- oder -Mischpolymerisate eingesetzt, welche mit aliphatischen oder aromatischen Aldehyden, mit vorzugsweise 1 bis 10 C-Atomen, welche gegebenenfalls mit einem oder mehreren Substituenten aus der Gruppe umfassend Hydroxy-, Carboxyl- und Sulfonat-, Ammonium-, Aldehyd-Rest substituiert sein können, acetalisiert sind. Bevorzugt werden Formaldehyd, Acetaldehyd, Benzaldehyd, Glyoxylsäure und Glycerinaldehyd. Gegebenenfalls können die Aldehyde auch in maskierter Form, beispielsweise als Halb- oder Vollacetal oder mit Schutzgruppe eingesetzt werden. Der Acetalisierungsgrad, das heißt die Besetzung der freien Hydroxylgruppen der verseiften Vinylacetatpolymerisate beträgt 0.5 bis 100 Mol-%, vorzugsweise 0.5 bis 70 Mol-%, insbesondere 0.5 bis 20 Mol-%.

Die Herstellung der Vinylalkohol-Mischpolymerisate kann mittels bekannter Verfahren wie Substanz-, Lösungs-, Suspensionsoder Emulsionspolymerisation erfolgen. Die Lösungspolymerisation erfolgt vorzugsweise in alkoholischer Lösung, beispielsweise in Methanol, Ethanol und Isopropanol. Suspensions- und Emulsionspolymerisation werden in wässrigem Medium durchgeführt. Die Polymerisation wird bei einer Temperatur von vorzugsweise 5°C bis 90°C durchgeführt und durch Zugabe von, für das jeweilige Polymerisationsverfahren üblichen, Initiatoren radikalisch initiiert. Die Vinylalkohol-Einheiten werden durch Copolymerisation von Vinylacetat in das Copolymere eingeführt, wobei die Acetatreste, genauso wie die weiteren verseifbaren Monomereinheiten, in einem nachfolgenden Hydrolyseschritt verseift werden. Die Einstellung des Molekulargewichtes kann in bekannter Weise durch Zugabe von Regler, durch den Lösungsmittelgehalt, durch Variation der Initiatorkonzentration und durch Variation der Temperatur erfolgen. Nach Abschluß der Polymerisation wird gegebenenfalls Lösungsmittel abdestilliert oder das Polymer durch Filtration aus der wässrigen Phase isoliert.

Die Verseifung erfolgt in an sich bekannter Weise im Alkalischen oder Sauren unter Zugabe von Base oder Säure. Vorzugsweise wird das zu verseifende Vinylacetat-Copolymer in Alkohol, beispielsweise Methanol, unter Einstellen eines Feststoffgehalts von 5 bis 50 % aufgenommen. Bevorzugt wird die Hydrolyse im Basischen durchgeführt, beispielsweise durch Zugabe von NaOH, KOH oder NaHCO₃. Das erhaltene Vinylalkohol-Mischpolymerisat kann aus dem Reaktionsgemisch durch Filtration oder Destillation des Lösungsmittelgemisches isoliert werden. Das filtrierte Produkt wird anschließend mit üblichen Methoden getrocknet und gemahlen.

Außerdem kann durch Zugabe von Wasser, vorteilhaft in Form von überhitztem Wasserdampf, während der Destillation der organischen Lösungsmittel eine wässrige Lösung erhalten werden. Für die Aufarbeitung einer wässrigen Lösung werden die Sprühtrocknung und die Ausfällung des Vinylalkohol-Mischpolymerisats, beispielsweise mit Methanol, bevorzugt. Anschließend wird mit einem Trocknungs- und Mahlschritt aufgearbeitet. Im allgemeinen wird bis zum Erhalt einer mittleren Korngröße von < 1 mm, vorzugsweise < 200 µm gemahlen.

Zur Acetalisierung werden die teil- oder vollverseiften Vinylacetat-Homo- oder -Mischpolymerisate vorzugsweise in wässrigem Medium aufgenommen. Die Acetalisierung erfolgt in Gegenwart von sauren Katalysatoren wie Salzsäure, Schwefelsäure oder Phosphorsäure. Nach Zugabe des Katalysators wird die Acetalisierungsreaktion bei einer Temperatur von 0°C bis 80°C, vorzugsweise 10°C bis 40°C durch Zugabe des Aldehyds gestartet und für die Dauer von 1 bis 10 Stunden, vorzugsweise 1 bis 4 Stunden durchgeführt. Da die Acetalisierung mit fast vollständigem Umsatz abläuft kann die Zugabemenge durch einfache stöchiometrische Rechnung bestimmt werden. Mittels Zugabe von Base wird der Ansatz anschließend neutralisiert und das Produkt durch Eintropfen in ein Lösungsmittel ausgefällt. Anschließend wird mit einem Trocknungs- und Mahlschritt aufgearbeitet. Im allgemeinen wird bis zum Erhalt einer mittleren Korngröße von < 1 mm, vorzugsweise < 200 µm gemahlen.

Beispiele für geeignete Alkylcelluloseether sind Methylcelluloseether, Ethylcelluloseether, für geeignete Hydroxyalkylcelluloseether Hydroxyethylcelluloseether und Hydroxypropylcelluloseether, für Carboxyalkylcelluloseether die Carboxymethylcelluloseether und für Cellulosemischether Hydroxyethylmethylcelluloseether, Hydroxypropylmethylcelluloseether, Hydroxyethylethylcelluloseether. Bevorzugt werden Celluloseether mit einem durchschnittlichen Substitutionsgrad DS von 0.1 bis 3.0, besonders bevorzugt 0.5 bis 1.5. Bevorzugt werden auch Celluloseether mit einer Höppler-Viskosität von 5000 bis 70000 mPas, insbesondere 20000 bis 50000 mPas (Methode nach Höppler, DIN 53015, 2 %-ige wässrige Lösung).

Die Mischungsverhältnisse von Polyvinylalkoholkomponente A) zu Celluloseetherkomponente B) sind so, daß 1 bis 50 Gew.-%, vorzugsweise 1 bis 20 Gew.-% Celluloseether, bezogen auf das Gesamtgewicht von A) und B), vorliegen. Die Herstellung der Verdickungsmittel-Zusammensetzungen kann durch Abmischung der Polyvinylalkohol-Komponente A) und der Celluloseetherkomponente B) in einem separaten Mischvorgang erfolgen. Bei der Herstellung von Verdickungsmittel-Zusammensetzungen auf Basis von verseiften Vinylacetat-Mischpolymerisaten wird der Celluloseether vorzugsweise vor der Verseifung zugegeben, und die Verseifung der Vinylacetat-Mischpolymerisate in Gegenwart der Celluloseetherkomponente B) durchgeführt. Bei der Herstellung von Verdickungsmittel-Zusammensetzungen auf Basis von acetalisierten, verseiften Vinylacetatpolymerisaten wird der Celluloseether vorzugsweise entweder in der wässrigen Lösung des Acetals oder in dem Fällungslösungsmittel vorgelegt. In den beiden zuletzt genannten Fällen wird anschließend mit einem Trocknungs- und Mahlschritt aufgearbeitet. Im allgemeinen wird bis zum Erhalt einer mittleren Korngröße von < 1 mm, vorzugsweise < 200 µm gemahlen.

Die Verdickungsmittel-Zusammensetzung kann als wässrige Lösung oder in Pulverform, oder als Additiv in wässrigen Polymerdispersionen oder in Wasser redispergierbaren Polymerpulvern eingesetzt werden. Sie kann allein oder im Gemisch mit weiteren Rheologieadditiven eingesetzt werden. Im allgemeinen wird die Verdickungsmittel-zusammensetzung in einer Menge von 0.01 bis 20 Gew.-% Verdickungsmittel (fest), bezogen auf das Gesamtgewicht der zu verdickenden Zusammensetzung, eingesetzt. Die Verdickungsmittel-Zusammensetzung eignet sich zur Verwendung als Verdickungsmittel auf allen Gebieten in denen rheologische Hilfsmittel eingesetzt werden. Beispielsweise als Verdickungsmittel in Kosmetika, im pharmazeutischen Bereich, in wasserbasierenden Siliconemulsionen oder in Siliconölen, in Beschichtungsmittel-Zusammensetzungen wie Dispersionsfarben oder Textilbeschichtungen, als Verdickungsmittel in Klebstoff-Zusammensetzungen, und als Verdickungsmittel in Bauanwendungen sowohl in hydraulisch abbindenden als auch nicht hydraulisch abbindenden Zusammensetzungen wie Beton, Zementmörtel, Kalkmörtel, Gipsmörtel. Möglich sind auch Anwendungen in wasserhaltigen Rezepturen in denen auch Celluloseether und Stärkeether als Verdickungsmittel eingesetzt werden. Besonders bevorzugt sind die Bauanwendungen. Ganz besonders bevorzugt sind zementäre Bauanwendungen wie zementäre Baukleber (Fliesenkleber), zementäre Trockenmörtel, zementäre Verlaufsmassen, zementäre Putze, zementäre Vollwärmeschutzkleber, zementären Dichtungsschlämmen.

Typische Rezepturen für zementäre Baukleber enthalten 5 bis 80 Gew.-% Zement, 5 bis 80 Gew.-% Füllstoffe wie Quarzsand, Calciumcarbonat oder Talkum, 0.5 bis 60 Gew.-% Polymerdispersion oder Polymerpulver, sowie 0.1 bis 5 Gew.-% Verdickungsmittel, und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur und addieren sich auf 100 Gew.-%. Die genannten zementhaltigen Baukleberrezepturen finden vor allem bei der Verlegung von Fliesen aller Art (Steingut, Steinzeug, Feinststeinzeug, Keramik, Naturfliesen) im Innen- und Außenbereich als Fliesenkleber Verwendung und werden vor deren Verwendung noch mit der entsprechenden Menge Wasser angeruhrt.

Die erfindungsgemäßen Verdickungsmittel-Zusammensetzungen eignen sich auch zur Verwendung in zementfreien Baurezepturen, beispielsweise mit der entsprechenden Menge Gips oder Wasserglas als anorganischem Bindemittel; vorzugsweise in gipshaltigen Zusammensetzungen wie Gipsputzen und Gipsspachtelmassen. Die zementfreien Rezepturen finden vor allem in Spachtelmassen, Fliesenklebern, Vollwärmeschutzklebern, Putzen und Farben Verwendung. Typische Rezepturen für Gipsformulierungen enthalten 15 bis 96 Gew.-% Gips, 3 bis 80 Gew.-% Füllstoffe wie Quarzsand, Calciumcarbonat oder Talkum, 0 bis 5 Gew.-% Kalkhydrat, 0 bis 5 Gew.-% Polymerdispersion oder Polymerpulver, sowie 0.01 bis 3 Gew.-% Verdickungsmittel, und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur und addieren sich auf 100 Gew.-%.

Die nachfolgenden Beispiele dienen zur weiteren Erläuterung der Erfindung.

### Beispiel 1:

In einer thermostatisierten Laborapparatur mit 2.5 Liter Füllvolumen wurden unter Stickstoff 612 g Wasser, 61.2 mg Kupfer-(II)-Acetat und 61.2 g einer 5 %-igen Polyvinylpyrrolidon-Lösung (PVP-K90) in Wasser vorgelegt. Unter Rühren wurde eine Lösung von 620 mg t-Butyl-per-2-ethyl-hexanoat (TBPEH), 322 mg t-Butyl-per-neodecanoat (TBPND) und 6.12 g VeoVa10 in 612 g Vinylacetat zugeführt. Der Reaktor wurde auf 51.5°C aufgeheizt, und nach Abflauen der Reaktion wurde stufenweise auf 75°C aufgeheizt. Es wurde noch 2 Stunden bei dieser Temperatur gehalten, dann abgekühlt. Die entstandenen Polymer-Perlen wurden abgesaugt, gut mit Wasser gewaschen und getrocknet. In einem Laborreaktor mit 2.5 Liter Inhalt wurden 90 g der Polymer-Perlen in 810 g Methanol bei 50°C gelöst. Die Lösung wurde auf 30°C abgekühlt, und 2.25 g Hydroxyethylmethylcellulose mit einer Höppler-Viskosität von 40000 mPas (2 %-ige wässrige Lösung) zugegeben, und bei stehendem Rührer mit 500 g Methanol überschichtet und sofort mit methanolischer NaOH versetzt (10 g NaOH (46 %-ig in Wasser) gelöst in 90 g Methanol) und der Rührer eingeschaltet. Die Lösung wurde zunehmend trüber. Während der Gelphase wurde der Rührer auf höhere Drehzahl gestellt, um das Gel zu zerkleinern. Nach der Gelphase wurde die Reaktion noch 2 Stunden weitergeführt, mit Essigsäure neutralisiert und der gebildete Feststoff abfiltriert, gewaschen, getrocknet und gemahlen.

### Beispiel 2:

Es wurde analog Beispiel 1 vorgegangen, jedoch die doppelte Menge, nämlich 4.5 g, Hydroxyethylmethylcellulose mit einer Höppler-Viskosität von 40000 mPas (2 %-ige wässrige Lösung) zugegeben.

### Beispiel 3:

Es wurde analog Beispiel 2 vorgegangen, jedoch 4.5 g Hydroxyethylmethylcellulose mit einer Höppler-Viskosität von 15000 mPas (2 %-ige wässrige Lösung) zugegeben.

### Beispiel 4:

Es wurde analog Beispiel 2 vorgegangen, jedoch 4.5 g Hydroxyethylmethylcellulose mit einer Höppler-Viskosität von 60000 mPas (2 %-ige wässrige Lösung) zugegeben.

### Beispiel 5:

Es wurde analog Beispiel 2 vorgegangen, aber zusätzlich noch 6.12 g Methylacrylat copolymerisiert.

### Beispiel 6:

Es wurde analog Beispiel 2 vorgegangen. Jedoch wurden der erhaltene Polyvinylalkohol in einer thermostatisierten Laborapparatur mit 2.5 Liter Füllvolumen als 6.6 %- ige wässrige Lösung (1000 g) vorgelegt. Der Reaktor wurde auf 30°C temperiert und es wurde mit 10 %-iger Salzsäure auf pH = 3.5 eingestellt. Über einen Zeitraum von 1 Stunde wurden 3.30 g Acetaldehyd zudosiert. Es wurde noch 2 Stunden bei dieser Temperatur gehalten, dann abgekühlt.
Anschließend wurde mit 10 %-iger Natriumhydroxidlösung neutralisiert. Die Lösung wurde in einen grossen Überschuss von Methanol, in welchem 6.6 g Hydroxyethylmethylcellulose mit einer Höppler-Viskosität von 40000 mPas (2 %-ige wässrige Lösung) suspendiert waren, tropfenweise eingegossen. Die ausgefällte Mischung wurde abgetrennt, getrocknet und gemahlen.

### Vergleichsbeispiel 7:

Handelsübliche Hydroxyethylmethylcellulose mit einer Höppler-Viskosität von 6000 mPas (2 %-ige wässrige Lösung).

### Vergleichsbeispiel 8:

Handelsübliche Hydroxyethylmethylcellulose mit einer Höppler-Viskosität von 40000 mPas (2 %-ige wässrige Lösung).

Testung der Verdickungsmittel aus den Beispielen 1 bis 6 sowie der Vergleichsbeispiele 7 und 8:

Die Prüfung der Verdickungsmittel wurde in folgender Formulierung durchgeführt:
55.2 Gew.-Teile Quarzsand Nr.9a (0.1-0.4 mm),
43.0 Gew.-Teile Zement 42.5 (Rohrdorfer),
1.5 Gew.-Teile Redispersionspulver (Vinnapas RE 530 Z),
0.7 Gew.-Teile Verdickungsmittel.
Die Trockenmischung wurde mit der in der Tabelle 1 angegebenen Menge Wasser versetzt, die Mischung 5 Minuten stehen gelassen und danach der Prüfung unterzogen.

### Testmethoden:

Die Testergebnisse sind in Tabelle 1 zusammengefaßt.

### Bestimmung der Geschmeidigkeit:

Die Geschmeidigkeit der Mischung wurde qualitativ mittels Rühren der Formulierung bestimmt. Die Bewertung erfolgte in einer Notenskala von 1 bis 6, wobei die Note 1 das Optimum darstellt.

### Bestimmung der Benetzung:

Zur Bestimmung der Benetzung wurde die Formulierung mit einer Zahntraufel auf eine Faserzementplatte aufgetragen, und die Benetzung der Platte qualitativ beurteilt. Die Bewertung erfolgte in einer Notenskala von 1 bis 6, wobei die Note 1 das Optimum darstellt.

### Bestimmung der Stegausbildung:

Die Formulierung wurde mit einer Zahntraufel auf eine Faserzementplatte aufgetragen, und die Qualität der dabei gebildeten Stege qualitativ beurteilt. Die Bewertung erfolgte in einer Notenskala von 1 bis 6, wobei die Note 1 das Optimum darstellt.

### Bestimmung der Wasserretention:

Die Bestimmung der Wasserretention wurde nach DIN 18555 Teil 7 vorgenommen. In Tabelle 1 ist der in der Formulierung verbliebene Wasseranteil angegeben.

### Bestimmung des Aufbruchs:

Die Fliesenkleberformulierung wurde auf eine Faserzementplatte appliziert und nach 10 Minuten eine Fliese (5 cm x 5 cm) aufgelegt, welche für 30 Sekunden mit einem Gewicht von 2 kg belastet wurde. Nach weiteren 60 Minuten wurde die Fliese abgenommen, und es wurde ermittelt zu welchem Prozentsatz die Fliesenrückseite noch mit Kleber behaftet ist.

### Bestimmung der Standfestigkeit (Abrutschtest) :

Zum Abrutschtest wurde eine Fliese (15 x 15 cm) wie oben in die Fliesenkleberformulierung eingelegt, mit 5 kg Gewicht für 30 Sekunden belastet, und der Probenaufbau senkrecht gestellt. Anschließend wurde die Oberkante der Fliese für jeweils 30 Sekunden mit Gewichten belastet und festgestellt, bei welchem Gewicht die Fliese abrutscht.

### Bestimmung des Zementabbindeverhaltens:

Das Zementabbindeverhalten wurde in der Fliesenkleberformulierung mit einem Thermofühler bestimmt. Es wurde die Zeit bis zum Einsetzen des Abbindens bestimmt und relativ zu einer Verdickungsmittel-freien Formulierung das Verzögern (Werte > 100) bzw. das Beschleunigen des Abbindens (Werte < 100) bestimmt.

### Diskussion der Meßergebnisse:

Die Testergebnisse zeigen, daß die erfindungsgemäße Verdickungsmittel-Zusammensetzung (Beispiele 1 bis 6) gegenüber herkömmlichen Celluloseethern (Vergleichsbeispiele 7 und 8) eine deutlich bessere Verarbeitbarkeit (Geschmeidigkeit, Benetzung, Stegausbildung) aufweist, bei vergleichbarer verdickender Wirkung (Aufbruch, Wasserretention, Abrutschen). Gegenüber herkömmlichen Verdickungsmittel auf Basis von Celluloseethern (Vergleichsbeispiele 7 und 8) zeichnen sich die Verdickungsmittel-Zusammensetzungen durch deutlich beschleunigtes Abbindeverhalten (Zementabbindung) aus.

**Tabelle 1:**

| **Beispiel** | | **Geschmeidigkeit** | **Benetzung** | **Stegausbildung** | **Aufbruch** | **Wasserretention** | **Abrutschen** | **Zementabbindung** |
|---|---|---|---|---|---|---|---|---|
| | **(g)** | | | | **(%)** | **(%)** | **(g)** | **(%)** |
| **Bsp.1** | 22.3 | 1 | 1 | 1 | 98 | 98.0 | 400 | 105 |
| **Bsp. 2** | 23.1 | 1 | 1 | 1 | 96 | 98.1 | 200 | 110 |
| **Bsp. 3** | 22.9 | 1 | 1 | 1 | 92 | 98.1 | 200 | 107 |
| **Bsp. 4** | 23.5 | 1 | 1 | 1.5 | 97 | 98.4 | 400 | 115 |
| **Bsp. 5** | 24.1 | 1 | 1 | 1.5 | 96 | 98.3 | 400 | 106 |
| **Bsp. 6** | 23.0 | 1 | 1 | 1 | 98 | 98.5 | 200 | 105 |
| **V.Bsp.7** | 23.5 | 2.5 | 2.5 | 1.5 | 97 | 98.3 | 200 | 170 |
| **V.Bsp.8** | 26.0 | 3.0 | 2.0 | 1.5 | 95 | 98.3 | 400 | 185 |

Die Testung der Verdickungsmittel in gipshaltigen Rezepturen (Gipsputzen) wurde in folgender Formulierung durchgeführt:

| | |
|---|---|
| Gips (Primoplast - Hilliges Gipswerk) | 700 g |
| Quarzsand (Nr.7; 0,2 - 0,7mm) | 237.6 g |
| Leichtfüllstoff Perlite (3 mm) | 25 g |
| Kalkhydrat (Walhalla) | 35 g |
| Verzögerer (Retardan, Aminobutyraldehyd-Kondensat) | 0.4 g |
| Verdickungsmittel | 2 g |

### Testmethoden:

Die Testergebnisse sind in Tabelle 2 zusammengefaßt.

### Bestimmung des Luftporengehalts:

Die Bestimmung des Luftporengehalts wurde nach DIN 18555 Teil 2 vorgenommen.

### Bestimmung der Wasserretention:

Die Bestimmung der Wasserretention wurde nach DIN 18555 Teil 7 vorgenommen.

### Geschmeidigkeit:

Die Geschmeidigkeit der Mischung wurde qualitativ mittels Rühren der Formulierung bestimmt. Die Bewertung erfolgte in einer Notenskala von 1 bis 6, wobei die Note 1 das Optimum darstellt.

### Standfestigkeit:

Die Standfestigkeit der Formulierung wurde qualitativ beim Durchfahren der Mischung mit einer Kelle beurteilt. Die Bewertung erfolgte in einer Notenskala von 1 bis 6, wobei die Note 1 das Optimum darstellt.

### Nachdicken:

Nach einer Rastzeit von 5 Minuten wurde qualitativ das Nachdicken der Formulierung beurteilt. Die Bewertung erfolgte in einer Notenskala von 1 bis 6, wobei die Note 1 das Optimum darstellt.

### Erstarrungsbeginn (EB), Erstarrungsende (EE):

Die Zeit bis zum beginnenden Erstarren wurde mittels einer in die Formulierung wiederholt eintauchende Nadel bestimmt. Der Erstarrungsbeginn ist der Zeitpunkt, ab dem mit gleichem Kraftaufwand die Eintauchtiefe der Nadel geringer war. Nach dem Erstarrungsende war ein Eintauchen mit gleichem Kraftaufwand nicht mehr möglich.

### Filzzeit:

Die Formulierung wurde mit einer Kelle auf eine Ziegelwand aufgetragen und nach einer Wartezeit mit einer Holzlatte abgezogen. Anschließend wurde der Putz mit einem angefeuchteten Schwamm gefilzt. Die Filzzeit ist diejenige Zeit, ab der mit dem Filzen begonnen werden kann ohne dass der Putz aufreißt (gemessen ab dem Auftragen der Formulierung).

### Ausbreitmaß:

Die Formulierung wird in einen Setztrichter auf einem Ausbreittisch nach DIN 1060 Teil 3 eingefüllt und das Ausbreitmaß der Mischung 1 Minute nach Entfernen des Trichters sowie nach Rütteln der Probe mit 15 Schlägen gemessen.

### Schwinden:

Von der Mischung werden Probekörper angefertigt und mittels eines Messgerätes nach DIN 52450 die Längenänderung der Prismen in der Längsachse nach 28 Tagen ermittelt.

**Tabelle 2:**

| Verdicker | H₂O (g) | H₂O-Retention (%) | | Luftporen (%) | Ausbreitmaß (cm) | Ausbreitmaß nach Rütteln (cm) | |
|---|---|---|---|---|---|---|---|
| Bsp. 2 | 435 | 98.4 | | 11.9 | 10.1 | 15.8 | |
| V.bsp. 7 | 420 | 98.9 | | 8.8 | 10.0 | 15.5 | |

| Verdicker | EB (min) | EE (min) | Nachdicken | Geschmeidigkeit | Standfestigkeit | Schwinden (mm/m) | Filzzeit (min) |
|---|---|---|---|---|---|---|---|
| Bsp. 2 | 95 | 115 | 1 | 1.0 | 1.0 | 0.247 | 48 |
| V.bsp. 7 | 100 | 120 | 1 | 2.0 | 3.0 | 0.261 | 55 |

## Patentansprüche

1. Verdickungsmittel auf der Basis von Zusammensetzungen mit Vinylalkohol-Mischpolymerisaten und Celluloseethern, wobei
A) ein oder mehrere vollverseifte oder teilverseifte Vinylalkohol-Polymerisate mit einem Hydrolysegrad von 75 bis 100 Mol-% und einem Molekulargewicht Mw > 100000 enthalten sind, erhältlich
a) durch Verseifung von Vinylacetat-Mischpolymerisaten, welche neben Vinylacetat-Einheiten noch Comonomereinheiten enthalten, welche sich von einem oder mehreren Comonomeren ableiten aus der Gruppe umfassend 1-Alkylvinylester mit C₁bis C₅-Alkylrest von C₁- bis C₅-Carbonsäuren, Allylester, Vinylester von alpha-verzweigten Carbonsäuren mit 5 bis 12 C-Atomen, Acrylsäure- und Methacrylsäureester von C₁- bis C₁₈-Alkoholen, oder erhältlich
b) durch Acetalisierung der genannten verseiften Vinylacetat-Mischpolymerisate oder von verseiften Vinylacetat-Homopolymerisaten mit aliphatischen oder aromatischen, gegebenenfalls substituierten, Aldehyden
und
B) ein oder mehrere Celluloseether aus der Gruppe umfassend Alkylcelluloseether, Hydroxyalkylcelluloseether, Carboxyalkylcelluloseether, Hydroxyalkylpolyoxyalkyl-Celluloseether mit jeweils C₁- bis C₁₀-Alkylresten, sowie Cellulosemischether mit mindestens zwei verschiedenen Substituenten aus der Gruppe umfassend Alkyl-, Hydroxyalkyl-, Carboxyalkylreste und Hydroxyalkylpolyoxyalkyl mit jeweils C₁- bis C₁₀-Alkylresten.

2. Verdickungsmittel nach Anspruch 1, **dadurch gekennzeichnet, daß** neben Vinylcetat-Einheiten noch Comonomereinheiten enthalten sind, welche sich von einem oder mehreren Comonomeren ableiten aus der Gruppe umfassend Isopropenylacetat, Vinylester von alpha-verzweigten Carbonsäuren mit 9 bis 11 C-Atomen, Acrylsäure- und Methacrylsäureester von C₁- bis C₁₀-Alkoholen.

3. Verdickungsmittel nach Anspruch 1 oder 2, **dadurch gekennzeichnet, daß** der Anteil der genannten Comonomer-Einheiten jeweils 0.3 bis 15 Gew.-% beträgt, jeweils bezogen auf das Gesamtgewicht des Vinylalkohol-Mischpolymerisats.

4. Verdickungsmittel nach Anspruch 1 bis 3, auf der Basis von Vinylalkohol-Mischpolymerisaten mit jeweils 0.3 bis 15 Gew.-% Isopropenylacetat oder Vinylester von alpha-verzweigten Carbonsäuren mit 9 bis 11 C-Atomen oder Methyl-, Ethyl-, Butyl-, 2-Ethylhexylacrylat und 2-Ethylhexylmethacrylat,
oder von Vinylalkohol-Mischpolymerisaten mit 0.3 bis 15 Gew.-% Isopropenylacetat-Einheiten und 0.3 bis 15 Gew.-% Vinylester von alpha-verzweigten Carbonsäuren mit 9 bis 11 C-Atomen,
oder von Vinylalkohol-Mischpolymerisaten mit 0.5 bis 6 Gew.-% Isopropenylacetat und 0.5 bis 6 Gew.-% Vinylester von alpha-verzweigten Carbonsäuren mit 10 C-Atomen, und 0.5 bis 6 Gew.-% Methylacrylat,
oder von Vinylalkohol-Mischpolymerisaten mit 0.5 bis 6 Gew.-% Isopropenylacetat und 0.5 bis 6 Gew.-% 2-Ethylhexylmethacrylat, und 0.5 bis 6 Gew.-% Methylacrylat.

5. Verdickungsmittel nach Anspruch 1, **dadurch gekennzeichnet, daß** teil- oder vollverseifte Vinylacetat-Homo- oder -Mischpolymerisate enthalten sind, welche mit aliphatischen oder aromatischen Aldehyden acetalisiert sind.

6. Verdickungsmittel nach Anspruch 5, **dadurch gekennzeichnet, daß** die aliphatischen oder aromatischen Aldehyde mit einem oder mehreren Substituenten aus der Gruppe umfassend Hydroxy-, Carboxyl-, Ammonium-, Aldehyd- und Sulfonat-Rest substituiert sind.

7. Verdickungsmittel nach Anspruch 5 oder 6, **dadurch gekennzeichnet, daß** der Acetalisierungsgrad 0.5 bis 100 Mol-% beträgt.

8. Verdickungsmittel nach Anspruch 1 bis 7, **dadurch gekennzeichnet, daß** Celluloseether mit einem durchschnittlichen Substitutionsgrad DS von 0.1 bis 3.0 enthalten sind.

9. Verdickungsmittel nach Anspruch 1 bis 8, **dadurch gekennzeichnet, daß** ein oder mehrere Celluloseether aus der Gruppe umfassend Methylcelluloseether, Ethylcelluloseether, Hydroxyethylcelluloseether, Hydroxypropylcelluloseether, Carboxymethylcelluloseether, Hydroxyethylmethylcelluloseether, Hydroxypropylmethylcelluloseether, Hydroxyethylethylcelluloseether enthalten sind.

10. Verdickungsmittel nach Anspruch 1 bis 9, **dadurch gekennzeichnet, daß** die Mischungsverhältnisse von Polyvinylalkoholkomponente A) zu Celluloseetherkomponente B) so sind, daß 1 bis 50 Gew.-% Celluloseether, bezogen auf das Gesamtgewicht von A) und B), vorliegen.

11. Verfahren zur Herstellung von Verdickungsmitteln gemäß Anspruch 1 bis 10, **dadurch gekennzeichnet, daß** die Herstellung mittels Abmischung der Polyvinylalkohol-Komponente A) und der Celluloseetherkomponente B) in einem separaten Mischvorgang erfolgt.

12. Verfahren zur Herstellung von Verdickungsmitteln gemäß Anspruch 1 bis 10, **dadurch gekennzeichnet, daß** der Celluloseether vor der Verseifung der Vinylacetat-Mischpolymerisate zugegeben wird, und die Verseifung der Vinylacetat-Mischpolymerisate in Gegenwart der Celluloseetherkomponente B) durchgeführt wird.

13. Verfahren zur Herstellung von Verdickungsmitteln gemäß Anspruch 1 bis 10, **dadurch gekennzeichnet, daß** der Celluloseether entweder in der wässrigen Lösung des acetalisierten und verseiften Vinylacetatpolymerisats oder in dem Fällungslösungsmittel vorgelegt wird und die Ausfällung des Acetalisierungsproduktes A) in Gegenwart der Celluloseetherkomponente B) durchgeführt wird.

14. Verwendung der Verdickungsmittel gemäß Anspruch 1 bis 10 als wässrige Lösung, in Pulverform, oder als Additiv in wässrigen Polymerdispersionen oder in Wasser redispergierbaren Polymerpulvern in einer Menge von 0.01 bis 20 Gew.-% Verdickungsmittel (fest), bezogen auf das Gesamtgewicht der zu verdickenden Zusammensetzung, in Kosmetika, im pharmazeutischen Bereich, in wasserbasierenden Siliconemulsionen, in Siliconölen, in Beschichtungsmittel-Zusammensetzungen, in Klebstoff-Zusammensetzungen, und in Bauanwendungen.

15. Verwendung nach Anspruch 14 in Bauanwendungen mit hydraulisch abbindenden und nicht hydraulisch abbindenden Zusammensetzungen.

16. Verwendung nach Anspruch 15 in zementären Bauklebern, zementären Trockenmörteln, zementären Verlaufsmassen, zementären Putzen, zementären Vollwärmeschutzkleber, zementären Dichtungsschlämmen.

17. Verwendung nach Anspruch 15 in zementfreien Spachtelmassen, Putzen, Fliesenklebern und Vollwärmeschutzklebern.

18. Verwendung nach Anspruch 17 in gipshaltigen Zusammensetzungen.

19. Verwendung nach Anspruch 18 in Gipsputzen und Gipsspachtelmassen.

20. Verwendung nach Anspruch 14 bis 19 im Gemisch mit in Wasser redispergierbaren Redispersionspulvern.

## Claims

1. Thickener based on compositions with vinyl alcohol copolymers and cellulose ethers, where
A) one or more fully or partially hydrolysed vinyl alcohol polymers with a degree of hydrolysis of from 75 to 100 mol% and with a molecular weight Mw > 100 000 is/are present, obtainable
a) by hydrolysing vinyl acetate copolymers which, besides vinyl acetate units, also contain comonomer units which derive from one or more comonomers selected from the group consisting of 1-alkylvinyl esters, with a C₁-C₅-alkyl radical, of C₁-C₅ carboxylic acids, allyl esters, vinyl esters of alpha-branched carboxylic acids having from 5 to 12 carbon atoms, and C₁-C₁₈-alkyl (meth)acrylates, or obtainable
b) by using aliphatic or aromatic, unsubstituted or substituted, aldehydes to acetalize the hydrolysed vinyl acetate copolymers mentioned or hydrolysed vinyl acetate homopolymers,
and
B) one or more cellulose ethers is/are present, selected from the group consisting of alkyl cellulose ethers, hydroxyalkyl cellulose ethers, carboxyalkyl cellulose ethers, and hydroxyalkylpolyoxyalkyl cellulose ethers, in each case having C₁-C₁₀-alkyl radicals, and mixed ethers of cellulose having at least two different substituents selected from the group consisting of alkyl radicals, hydroxyalkyl radicals, carboxyalkyl radicals, and hydroxyalkylpolyoxyalkyl, in each case having C₁-C₁₀-alkyl radicals.

2. Thickener according to Claim 1, **characterized in that**, besides vinyl acetate units, there are also comonomer units present which derive from one or more comonomers selected from the group consisting of isopropenyl acetate, vinyl esters of alpha-branched carboxylic acids having from 9 to 11 carbon atoms, and C₁-C₁₀-alkyl (meth)acrylates.

3. Thickener according to Claim 1 or 2, **characterized in that** the proportion of the comonomer units mentioned is in each case from 0.3 to 15% by weight, based in each case on the total weight of the vinyl alcohol copolymer.

4. Thickener according to any of Claims 1 to 3, based on vinyl alcohol copolymers in each case having from 0.3 to 15% by weight of isopropenyl acetate, or vinyl esters of alpha-branched carboxylic acids having from 9 to 11 carbon atoms, or methyl, ethyl, butyl or 2-ethylhexyl acrylate, or 2-ethylhexyl methacrylate,
or on vinyl alcohol copolymers having from 0.3 to 15% by weight of isopropenyl acetate units and from 0.3 to 15% by weight of vinyl esters of alpha-branched carboxylic acids having from 9 to 11 carbon atoms,
or on vinyl alcohol copolymers having from 0.5 to 6% by weight of isopropenyl acetate and from 0.5 to 6% by weight of vinyl esters of alpha-branched carboxylic acids having 10 carbon atoms, and from 0.5 to 6% by weight of methyl acrylate,
or on vinyl alcohol copolymers having from 0.5 to 6% by weight of isopropenyl acetate and from 0.5 to 6% by weight of 2-ethylhexyl methacrylate, and from 0.5 to 6% by weight of methyl acrylate.

5. Thickener according to Claim 1, **characterized in that** the partially or fully hydrolysed vinyl acetate homo- or copolymers present comprise polymers which have been acetalized using aliphatic or aromatic aldehydes.

6. Thickener according to Claim 5, **characterized in that** the aliphatic or aromatic aldehydes have substitution by one or more substituents selected from the group consisting of the hydroxyl, carboxyl, ammonium, aldehyde and sulphonate radicals.

7. Thickener according to Claim 5 or 6, **characterized in that** the degree of acetalization is from 0.5 to 100 mol%.

8. Thickener according to any of Claims 1 to 7, **characterized in that** the cellulose ethers present comprise ethers with an average degree of substitution DS of from 0.1 to 3.0.

9. Thickener according to any of Claims 1 to 8, **characterized in that** the cellulose ethers present comprise one or more ethers selected from the group consisting of methyl cellulose ethers, ethyl cellulose ethers, hydroxyethyl cellulose ethers, hydroxypropyl cellulose ethers, carboxymethyl cellulose ethers, hydroxyethyl methyl cellulose ethers, hydroxypropyl methyl cellulose ethers, and hydroxyethyl ethyl cellulose ethers.

10. Thickener according to any of Claims 1 to 9, **characterized in that** the ratios for mixing polyvinyl alcohol component A) and cellulose ether component B) are such that from 1 to 50% by weight of cellulose ether are present, based on the total weight of A) and B).

11. Process for preparing thickeners according to any of Claims 1 to 10, **characterized in that** the preparation is carried out by blending polyvinyl alcohol component A) and cellulose ether component B) in a separate mixing procedure.

12. Process for preparing thickeners according to any of Claims 1 to 10, **characterized in that** the cellulose ether is added prior to hydrolysing the vinyl acetate copolymers, and the hydrolysis of the vinyl acetate copolymers is carried out in the presence of cellulose ether component B).

13. Process for preparing thickeners according to any of Claims 1 to 10, **characterized in that** the cellulose ether is used as an initial charge, either in the aqueous solution of the acetalized and hydrolysed vinyl acetate polymer or in the precipitation solvent, and the precipitation of acetalization product A) is carried out in the presence of cellulose ether component B).

14. Use of the thickeners according to any of Claims 1 to 10 as an aqueous solution, in powder form, or as an additive in aqueous polymer dispersions or in water-redispersible polymer powders, in amounts of from 0.01 to 20% by weight of thickener (solid), based on the total weight of the composition to be thickened, in cosmetics, in the pharmaceutical sector, in water-based silicone emulsions, in silicone oils, in coating compositions, in adhesive compositions, or in construction applications.

15. Use according to Claim 14 in construction applications with hydraulically setting or non-hydraulically setting compositions.

16. Use according to Claim 15 in cement-type construction adhesives, cement-type dry mortars, cement-type flowable compositions, cement-type renders, cement-type exterior insulation system adhesives, or cement-type non-shrink grouts.

17. Use according to Claim 15 in cement-free troweling compositions, in renders, in tile adhesives, or in exterior insulation system adhesives.

18. Use according to Claim 17 in gypsum-containing compositions.

19. Use according to Claim 18 in gypsum renders or in gypsum troweling compounds.

20. Use according to any of Claims 14 to 19 in a mixture with water-redispersible redispersion powders.

## Revendications

1. Epaississants à base de compositions comprenant des copolymères d'alcool vinylique et des éthers cellulosiques, comprenant
A) un ou plusieurs polymères d'alcool vinylique partiellement ou totalement hydrolysés, présentant un degré d'hydrolyse de 75 à 100 % en moles et un poids moléculaire Mw > 100 000, pouvant être obtenus
a) par hydrolyse de copolymères d'acétate de vinyle, qui peuvent également renfermer, en plus de motifs acétate de vinyle, des motifs comonomères qui sont dérivés d'un ou de plusieurs comonomères parmi le groupe constitué d'esters 1-alkylvinyliques, renfermant un alkyle en C₁ à C₅, d'acides carboxyliques en C₁ à C₅, d'esters allyliques, d'esters vinyliques d'acides carboxyliques ramifiés en alpha ayant de 5 à 12 atomes de carbone, d'esters acryliques et méthacryliques d'alcools en C₁ à C₁₈, ou pouvant être obtenus
b) par acétalisation des copolymères d'acétate de vinyle hydrolysés mentionnés ou d'homopolymères d'acétate de vinyle hydrolysés avec des aldéhydes aliphatiques ou aromatiques, éventuellement substitués,
et
B) un ou plusieurs éthers cellulosiques parmi le groupe constitué d'éthers d'alkylcellulose, d'éthers d'hydroxyalkylcellulose, d'éthers de carboxyalkylcellulose, d'éthers d'hydroxyalkylpolyoxyalkylcellulose renfermant, dans chaque cas, des radicaux alkyle en C₁ à C₁₀, ainsi que d'éthers mixtes cellulosiques renfermant au moins deux substituants différents parmi le groupe constitué de radicaux alkyle, hydroxyalkyle, carboxyalkyle et hydroxyalkylpolyoxyalkyle renfermant, dans chaque cas, des radicaux alkyle en C₁ à C₁₀.

2. Epaississants selon la revendication 1, **caractérisés en ce qu'**ils renferment également, en plus de motifs acétate de vinyle, des motifs comonomères qui sont dérivés d'un ou de plusieurs comonomères parmi le groupe constitué de l'acétate d'isopropényle, d'esters vinyliques d'acides carboxyliques ramifiés en alpha ayant de 9 à 11 atomes de carbone, d'esters acryliques et méthacryliques d'alcools en C₁ à C₁₀.

3. Epaississants selon la revendication 1 ou 2, **caractérisés en ce que** la proportion des motifs comonomères mentionnés est, dans chaque cas, de 0,3 à 15 % en poids, dans chaque cas par rapport au poids total du copolymère d'alcool vinylique.

4. Epaississants selon les revendications 1 à 3, à base de copolymères d'alcools vinyliques renfermant, dans chaque cas, de 0,3 à 15 % en poids d'acétate d'isopropényle ou d'esters vinyliques d'acides carboxyliques ramifiés en alpha ayant de 9 à 11 atomes de carbone, ou d'acrylate de méthyle, d'éthyle, de butyle ou de 2-éthylhexyle et de méthacrylate de 2-éthylhexyle,
ou de copolymères d'alcool vinylique renfermant de 0,3 à 15 % en poids de motifs acétate d'isopropényle et de 0,3 à 15 % en poids d'esters vinyliques d'acides carboxyliques ramifiés en alpha ayant de 9 à 11 atomes de carbone,
ou de copolymères d'alcool vinylique renfermant de 0,5 à 6 % en poids d'acétate d'isopropényle et de 0,5 à 6 % en poids d'esters vinyliques d'acides carboxyliques ramifiés en alpha ayant 10 atomes de carbone, et de 0,5 à 6 % en poids d'acrylate de méthyle,
ou de copolymères d'alcool vinylique renfermant de 0,5 à 6 % en poids d'acétate d'isopropényle et de 0,5 à 6 % en poids de méthacrylate de 2-éthylhexyle, et de 0,5 à 6 % en poids d'acrylate de méthyle.

5. Epaississants selon la revendication 1, **caractérisés en ce qu'**ils comprennent des homopolymères ou des copolymères d'acétate de vinyle partiellement ou totalement hydrolysés qui sont acétalisés avec des aldéhydes aliphatiques ou aromatiques.

6. Epaississants selon la revendication 5, **caractérisés en ce que** les aldéhydes aliphatiques ou aromatiques sont substitués par un ou plusieurs substituants parmi le groupe constitué de radicaux hydroxy, carboxy, ammonium, aldéhyde et sulfonate.

7. Epaississants selon la revendication 5 ou 6, **caractérisés en ce que** le degré d'acétalisation est de 0,5 à 100 % en moles.

8. Epaississants selon les revendications 1 à 7, **caractérisés en ce qu'**ils comprennent des éthers cellulosiques présentant un degré de substitution moyen DS de 0,1 à 3,0.

9. Epaississants selon les revendications 1 à 8, **caractérisés en ce qu'**ils comprennent un ou plusieurs éthers cellulosiques parmi le groupe constitué d'éthers de méthylcellulose, d'éthers d'éthylcellulose, d'éthers d'hydroxyéthylcellulose, d'éthers d'hydroxypropylcellulose, d'éthers de carboxyméthylcellulose, d'éthers d'hydroxyéthylméthylcellulose, d'éthers d'hydroxypropylméthylcellulose et d'éthers d'hydroxyéthyléthylcellulose.

10. Epaississants selon les revendications 1 à 9, **caractérisés en ce que** les rapports de mélange entre le composant alcool polyvinylique A) et le composant éther cellulosique B) sont tels qu'il y ait de 1 à 50 % en poids d'éther cellulosique, par rapport au poids total de A) et B).

11. Procédé de préparation d'épaississants selon les revendications 1 à 10, **caractérisé en ce que** la préparation est réalisée en mélangeant le composant alcool polyvinylique A) et le composant éther cellulosique B) dans un processus de mélangeage séparé.

12. Procédé de préparation d'épaississants selon les revendications 1 à 10, **caractérisé en ce que** l'éther cellulosique est ajouté avant l'hydrolyse des copolymères d'acétate de vinyle, et l'hydrolyse des copolymères d'acétate de vinyle est réalisée en présence du composant éther cellulosique B).

13. Procédé de préparation d'épaississants selon les revendications 1 à 10, **caractérisé en ce que** l'éther cellulosique est introduit initialement soit dans la solution aqueuse du polymère d'acétate de vinyle acétalisé et hydrolysé, soit dans le solvant de précipitation, et la précipitation du produit d'acétalisation A) est réalisée en présence du composant éther cellulosique B).

14. Utilisation des épaississants selon les revendications 1 à 10 en tant que solution aqueuse, sous forme de poudre, ou en tant qu'additif dans des dispersions polymères aqueuses ou dans des poudres polymères redispersables dans l'eau, en une quantité de 0,01 à 20 % en poids d'épaississants (solide) par rapport au poids total de la composition à épaissir, dans des cosmétiques, dans le secteur pharmaceutique, dans des émulsions siliconées à base d'eau, dans des huiles siliconées, dans des compositions de revêtements, dans des compositions adhésives et dans des applications en construction.

15. Utilisation selon la revendication 14 dans des applications en construction avec des compositions à prise hydraulique et à prise non hydraulique.

16. Utilisation selon la revendication 15 dans des adhésifs de construction cimentaires, des mortiers secs cimentaires, des compositions nivelantes cimentaires, des crépis cimentaires, des adhésifs cimentaires d'isolation thermique totale ou des boues d'étanchéité cimentaires.

17. Utilisation selon la revendication 15 dans des mastics exempts de ciment, des crépis, des adhésifs pour carrelage et des adhésifs d'isolation thermique totale.

18. Utilisation selon la revendication 17 dans des compositions contenant du gypse.

19. Utilisation selon la revendication 18 dans des crépis au gypse et des mastics au gypse.

20. Utilisation selon les revendications 14 à 19, en mélange avec des poudres de redispersion redispersables dans l'eau.
